# EUROPÄISCHE PATENTANMELDUNG

(11) **EP 1 111 540 A1**
(43) Veröffentlichungstag der Anmeldung: **27.06.2001**
(21) Anmeldenummer: 00811019.9
(22) Anmeldetag: 01.11.2000
(51) Int. Cl.: G06K 19/077

(54) **Verfahren zur Herstellung eines Kunststoffobjektes, insbesondere einer Multimediakarte**

(30) Priorität: 23.12.1999 EP 99811205; 08.05.2000 EP 00810392
(71) Anmelder: Esec SA, 6330 Cham (CH)
(72) Erfinder: Truckenbrod, Willi, 6300 Zug (CH); Linder, Samuel, 8912 Obfelden (CH)
(74) Vertreter: Falk, Urs, Dr.

(57) **Zusammenfassung**

Die Herstellung eines Kunststoffobjektes, das einen Körper aus Kunststoff, einen darin eingebetteten Halbleiterchip (1) und ein Substrat mit freiliegenden elektrischen Kontaktflächen (6) umfasst, vereinfacht sich, indem das mit dem ungeschützten Halbleiterchip (1) bestückte Substrat (2; 16) im Hohlraum (3) einer Spritzgussform plaziert und im nächsten Schritt das Kunststoffgehäuse des Kunststoffobjektes durch Umspritzen des Substrats mit Kunststoff hergestellt wird. Das Umspritzen mit Kunststoff erfolgt bevorzugt im Transfer-Molding Verfahren. Als Substrat dient vorzugsweise ein metallischer Träger (16), der Teil eines Leadframes (24) ist und der teilweise mit einer folie (17) bedeckt ist, wobei der Träger (16) während des Umspritzens mit Kunststoff über Stege (23) mit ausserhalb des Hohlraumes (3) liegenden Teilen des Leadframes (24) verbunden ist.

## Beschreibung

Die Erfindung betrifft ein Verfahren zur Herstellung eines Kunststoffobjektes, insbesondere einer Multimediakarte, der im Oberbegriff des Anspruchs 1 genannten Art.

Kunststoffobjekte, beispielsweise sogenannte Multimediakarten, bestehen aus einem flachen Kunststoffgehäuse, an dessen einer Oberfläche elektrische Kontaktflächen freiliegen. Im Inneren des Kunststoff-gehäuses ist ein Halbleiterchip eingebettet, der elektrisch mit den freiliegenden Kontaktflächen verbunden ist. Bei der Herstellung solcher Multimediakarten wird der Halbleiterchip zunächst auf einem Substrat montiert und mittels extrem feinen Drähten elektrisch mit dem Substrat verbunden. Für die weitere Verarbeitung zur fertigen Multimediakarte sind verschiedene Verfahren bekannt:

Bei einem ersten Verfahren dient eine Leiterplatte als Substrat. Der montierte und verdrahtete Halbleiterchip wird durch Aufbringen eines sogenannten Globtopes mit Kunststoff umhüllt, um die Drähte gegen mechanische Beschädigungen und Kurzschlüsse zu schützen. Die Leiterplatte wird zusätzlich mit elektronischen Bauteilen, beispielsweise Kondesatoren, bestückt und anschliessend in die Ausnehmung eines vorgespritzten Kunststoffkörpers eingelegt und durch Kleben oder mittels Ultraschall in der Ausnehmung fixiert. Schliesslich wird über der Leiterplatte noch eine Etikette angebracht, so dass die Leiterplatte zwischen dem Kunststoffkörper und der Etikette eingebettet ist und nur noch die elektrischen Kontaktflächen an der Oberfläche der Multimediakarte freiliegen.

Bei einem weiteren Verfahren dient ein metallisches, teilweise mit einer Folie überzogenes Leadframe als Substrat. Der montierte und verdrahtete Halbleiterchip wird durch Transfer-Molden in einer Umhüllung aus Kunststoff eingebettet. Nach dem Molden wird der umhüllte Halbleiterchip aus dem Leadframe freigestanzt: Auf diese Weise entsteht als Halbzeug ein sogenanntes Elektronikmodul. Anschliessend wird das Elektronikmodul gemäss der Lehre des europäischen Patents EP 399 868 B1 im Spritzgussverfahren mit Plastikmaterial zur fertigen Multimediakarte umspritzt. Der Beschriftung dienende Etiketten können bei diesem Spritzgussvorgang gleich mit aufgebracht werden. Für Multimediakarten, bei denen sich die freiliegenden Kontaktflächen nicht über, sondern neben dem Halbleiterchip befinden, ist mit der DE 196 25 228 eine Weiterentwicklung dieses Verfahrens bekannt geworden, bei dem das Leadframe so gestaltet ist, dass die freiliegenden Kontaktflächen während des Spritzguss-vorgangs gegen die Wand der Spritzgussform gedrückt werden.

Bei einem weiteren bekannten Verfahren wird als Substrat eine flexible Leiterplatte verwendet und der montierte und verdrahtete Halbleiterchip wird durch Transfer-Molden in einer Umhüllung aus Kunststoff eingebettet und dann zu einem flachen Elektronikmodul freigestanzt. Die eine Flachseite des Elektronikmoduls ist dabei vollständig mit den freiliegenden Kontaktflächen bedeckt. Anschliessend wird das Elektronikmodul in die Ausnehmung eines vorgespritzten Kunststoffkörpers eingelegt und durch Kleben in der Ausnehmung fixiert.

Der Erfindung liegt die Aufgabe zugrunde, die Herstellung von Multimediakarten zu vereinfachen.

Die Erfindung besteht in den im Anspruch 1 angegebenen Merkmalen. Vorteilhafte Ausgestaltungen ergeben sich aus den abhängigen Ansprüchen.

Die Erfindung schlägt vor, den Herstellungsprozess von Multimediakarten durch Weglassen des Zwischenschrittes der Bildung des Elektronikmoduls zu vereinfachen. Erfindungsgemäss wird deshalb das mit dem freiliegenden, ungeschützten Halbleiterchip bestückte Substrat im Hohlraum einer Spritzgussform plaziert und im nächsten Schritt das Kunststoffgehäuse der Multimediakarte durch Umspritzen des Substrats mit Kunststoff hergestellt.

Das Umspritzen des Substrats mit Kunststoff erfolgt vorzugsweise durch sogenanntes Spritzpressen, auch Transfer-Pressen genannt. Dieses Verfahren ist in der Halbleiterindustrie für die Verkapselung von integrierten Schaltungen weit verbreitet und wird allgemein als Transfer-Molding Verfahren bezeichnet. Dieses Transfer-Molding Verfahren zeichnet sich dadurch aus, dass der einzuspritzende Kunststoff in einer Druckkammer unter Druck und Wärme fliessbar gemacht und mit einem Stempel durch einen Kanal. einen sogenannten Runner, in den Hohlraum der Spritzgussform gepresst wird. Beim Eintritt in den Hohlraum ist der Kunststoff hochgradig flüssig (etwa wie Wasser) und kann daher unter relativ geringem Druck von wenigen Bar in den Hohlraum gepresst werden. Im Prinzip können alle für das Transfer-Molding Verfahren bekannten bzw. geeigneten Kunststoffe, insbesondere Kunststoffe auf Duroplast oder Epoxy Basis verwendet werden. Bei sorgfältiger Wahl der Lage der Eintrittsmündung des Runners in den Hohlraum. des sogenannten Gates, ist einerseits eine Beschädigung der ungeschützten Drähte und andererseits auch eine unerwünschte horizontale oder vertikale Verschiebung des Substrats ausgeschlossen. Weitere Vorteile des Transfer-Molding Verfahrens bestehen darin, dass wegen des vergleichsweise geringen Drucks im gleichen Spritzvorgang mehrere Kunststoffobjekte hergestellt werden können und dass das fertige Kunststoffobjekt automatisch die gleichen Qualitätsanforderungen erfüllt wie ein mit dem gleichen Kunststoff hergestellter IC.

Das Umspritzen des Substrats mit Kunststoff kann aber auch mit dem bei der Chipkartenherstellung verwendeten Spritzgiessverfahren erfolgen, das auch als Injection-Molding bezeichnet wird. Bei diesem Verfahren bleibt der Kunststoff zähflüssig und muss daher unter hohem Druck von typischerweise 1000 Bar in den Hohlraum gepresst werden. Beim Spritzgiessen kommen sowohl Duroplaste, die in der Spritzgussform durch chemische Reaktion aushärten, als auch Thermoplaste, die durch Kühlen aushärten, zur Verwendung. Bekannte Kunststoffe sind beispielsweise ABS oder PET.

Eine besonders einfache Herstellung der Multimediakarte oder auch anderer Kunststoffobjekte ergibt sich, wenn als Substrat ein Leadframe verwendet wird. Das Kunststoffobjekt kann dann wie ein herkömmlicher IC hergestellt werden.

Nachfolgend werden Ausführungsbeispiele der Erfindung anhand der Zeichnung näher erläutert.

Es zeigen:
- Fig. 1: in seitlicher Ansicht eine mit einem Halbleiterchip bestückte Leiterplatte, die im Hohlraum einer Spritzgussform plaziert ist,
- Fig. 2: die Leiterplatte in der Aufsicht,
- Fig. 3, 4: in seitlicher Ansicht einen freigestanzten, mit einem Halbleiterchip bestückten metallischen Träger, der im Hohlraum der Spritzgussform plaziert ist,
- Fig. 5: in der Aufsicht einen metallischen Träger in der Form eines Leadframes
- Fig. 6: einen metallischen Träger mit etwa "S"-förmig gebogenen Fingern, und
- Fig. 7, 8: Multimediakarten.

### Beispiel 1

Dieses Beispiel betrifft ein Kunststoffobjekt, beispielsweise eine Multimediakarte, bei dem eine herkömmliche Leiterplatte aus organischem Material als Substrat dient.

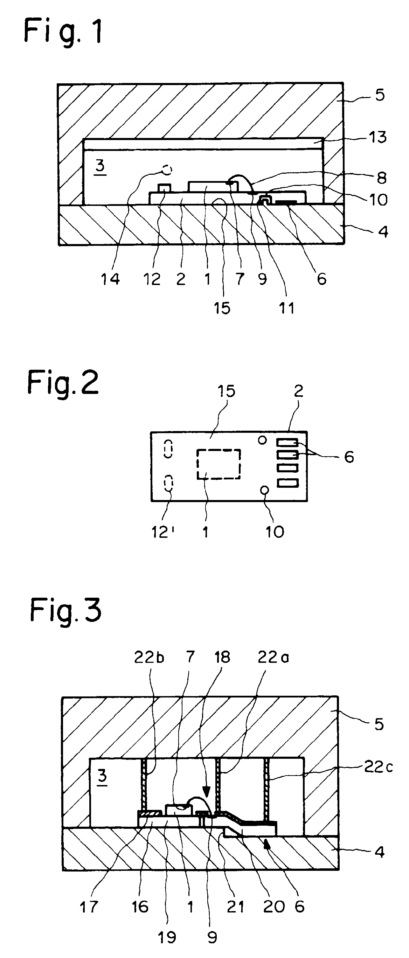

Die Fig. 1 zeigt schematisch eine mit einem Halbleiterchip 1 bestückte Leiterplatte 2, die im Hohlraum 3 einer durch eine untere und eine obere Formhälfte 4, 5 gebildeten Spritzgussform plaziert ist. Der Halbleiterchip 1 ist nackt und ungeschützt, d.h. weder in einen Globe Top noch in ein Kunststoffgehäuse eingebettet. Die Leiterplatte 2 weist auf der der unteren Formhälfte 4 zugewandten Seite elektrische Kontaktflächen 6 auf, die als Aussenkontakte des fertigen Kunststoffobjektes dienen. Die Kontaktflächen 6 sind flach und bündig mit einer Aussenseite des fertigen Kunststoffobjektes. Anschlusspunkte 7, sogenannte Pads. des Halbleiterchips 1 sind über Drähte 8 mit Anschlusspunkten 9 der Leiterplatte 2 verbunden. Die Anschlusspunkte 9 der Leiterplatte 2 sind in herkömmlicher Art mit den elektrischen Kontaktflächen 6 verbunden. Die Leiterplatte 2 weist Vertiefungen 10 oder durchgehende Bohrungen auf, in die starr oder beweglich an der unteren Formhälfte 4 angeordnete Positionierstifte 11 eingreifen. Die Positionierstifte 11 dienen dazu. die Leiterplatte 2 im Hohlraum 3 zu positionieren und deren stabile horizontale Lage während des Vergiessens mit Kunststoff zu gewährleisten. Fakultativ ist die Leiterplatte 2 noch mit elektronischen Bauteilen 12, beispielsweise Kondensatoren, bestückt. Ebenfalls fakultativ ist eine Etikette 13 in die obere Formhälfte 5 eingelegt, die z.B. elektrostatisch aufgeladen ist und daher an der oberen Formhälfte 5 haftet. Eine bevorzugte Lage der Eintrittsmündung 14 für den Kunststoff in den Hohlraum 3. das sogenannte Gate, befindet sich oberhalb der Leiterplatte 2 und oberhalb der allfällig vorhandenen elektronischen Bauteile 12 sowie seitlich fernab der Drähte 8.

Nach der Plazierung der Leiterplatte 2 auf der unteren Formhälfte 4 wird die Spritzgussform geschlossen und die Leiterplatte 2 mit der sofern vorhandenen Etikette 13 zum fertigen Kunststoffobjekt vergossen, vorzugsweise im Transfer-Molding Verfahren. Bewährt hat sich die Anordnung der Eintrittsmündung 14 oberhalb der Leiterplatte 2, so dass der in den Hohlraum 3 hineinströmende Kunststoff eine gegen die untere Formhälfte 4 gerichtete Kraft auf die Leiterplatte 2 ausübt und die Leiterplatte 2 somit an die Wand der Spritzgussform drückt. Dadurch wird erreicht, dass ein allfälliger Luftspalt zwischen der Leiterplatte 2 und der unteren Formhälfte 4 automatisch eliminiert wird, bevor Kunststoff an die Unterseite 15 der Leiterplatte 2 gelangen kann.

Die Leiterplatte 2 kann aus einem relativ starren Material wie FR4 oder, bevorzugt, aus einem flexiblen Material, das sich unter dem Druck, den der in den Hohlraum 3 einströmende Kunststoff auf die Leiterplatte 2 ausübt, an die untere Formhälfte 4 anschmiegt, bestehen. Entweder muss die Unterseite 15 der Leiterplatte 2 völlig plan zur Fläche der unteren Formhälfte 4 sein oder es muss die Leiterplatte 2 so flexibel sein, dass eine allfällige Wölbung der Leiterplatte 2 beim Einspritzen des Kunststoffs zum Verschwinden gebracht wird, bevor Kunststoff in den wegen der Wölbung der Leiterplatte 2 bestehenden Hohlraum zwischen der Unterseite 15 der Leiterplatte 2 und der unteren Formhälfte 4 eindringt.

Die elektrischen Verbindungen zwischen dem Halbleiterchip 1 und dem Substrat erfolgen über die Drähte 8. Sie können aber auch durch Bumps hergestellt werden: Der Halbleiterchip 1 wird dabei als Flip-Chip montiert. Der zwischen dem Halbleiterchip 1 und der Leiterplatte 2 verbleibende Spalt wird beim Vergiessen im Transfer-Molding Verfahren auch mit Kunststoff gefüllt: ein separates "Underfill" ist nicht erforderlich.

Die Fig. 2 zeigt die Unterseite 15 der Leiterplatte 2 mit den Kontaktflächen 6 und mit zwei Vertiefungen 10, in die die Positionierstifte 11 (Fig. 1) der Spritzgussform eingreifen. Gestrichelt eingezeichnet sind der Halbleiterchip 1 und Kondensatoren 12', die sich auf der Oberseite der Leiterplatte 2 befinden. Die Unterseite 15 der Leiterplatte 2 bildet eine Aussenseite des fertigen Kunststoffobjektes: Die Kontaktflächen 6 sind flächig in die Oberfläche des Kunststoffobjektes integriert.

Die folgenden Beispiele betreffen ein Kunststoffobjekt. insbesondere eine Multimediakarte, bei dem ein aus einem Blechteil geformter metallischer Träger als Substrat dient. Der Träger kann dabei in der Form eines freigestanzten Einzelteils in die Spritzgussform eingelegt, dort mit Positionierstiften gehalten und zum Kunststoffobjekt vergossen werden. Bevorzugt wird der Träger jedoch in der Form eines Leadframes der Spritzgussform zugeführt, dort zum Kunststoffobjekt vergossen, und dann das Kunststoffobjekt vom nicht vergossenen Teil des Leadframes abgetrennt.

### Beispiel 2

Die Fig. 3 zeigt einen mit einem nackten Halbleiterchip 1 bestückten, metallischen Träger 16, der nach dem Montieren und Verdrahten des Halbleiterchips 1 vom restlichen Teil eines Leadframes durch Stanzen abgetrennt wurde. Der metallische Träger 16 ist auf der dem Halbleiterchip 1 zugewandten Seite mit einer Folie 17 - auch Tape genannt - bedeckt. Die Folie 17 enthält Löcher 18, damit die Anschlusspunkte 7 des Halbleiterchips 1 über die Drähte 8 mit den Anschlusspunkten 9 des Trägers 16 verdrahtet werden können. Der metallische Träger 16 enthält eine Chipinsel 19, auf der der Halbleiterchip 1 angeordnet ist, und Finger 20, deren eine Enden die später freiliegenden Kontaktflächen 6 des fertigen Kunststoffobjektes enthalten werden. Der Halbleiterchip 1 kann entweder auf der Folie 17 oder in einem in der Folie 17 angebrachten Loch auf dem metallischen Träger 16 aufgeklebt sein.

Die untere Formhälfte 4 weist eine Stufe 21 auf. Die Höhe der Stufe 21 entspricht der Dicke einer nachträglich auf dem gespritzten Kunststoffobjekt anzubringenden Etikette. Die Finger 20 des Trägers 16 sind derart gebogen, dass sowohl die Chipinsel 19 als auch die Kontaktflächen 6 auf beiden Seiten der Stufe 21 auf der unteren Formhälfte 4 aufliegen. An der oberen Formhälfte 5 sind feste oder zurückziehbare Stifte 22a angeordnet, die den Träger 16 im geschlossenen Zustand der beiden Formhälften 4 und 5 unmittelbar neben der Stufe 21 gegen den erhöhten Bereich der unteren Formhälfte 4 drücken. Die Biegung des Trägers 16 ist vorzugsweise derart gestaltet, dass die Kontaktflächen 6 des mit den Positionierstiften 11 festgehaltenen Trägers 16 gegen die untere Formhälfte 4 drücken und somit plan auf der unteren Formhälfte 4 aufliegen. Fakultativ sind weitere Stifte 22b und/oder 22c vorgesehen, die den Träger 16 im Bereich der Chipinsel 19 bzw. im Bereich der Kontaktflächen 6 gegen den erhöhten bzw. abgesenkten Bereich der unteren Formhälfte 4 drücken. Mit diesen Massnahmen wird sichergestellt, dass sowohl die Kontaktflächen 6 als auch die Chipinsel 19 plan auf der unteren Formhälfte 4 aufliegen, so dass beim anschliessenden Transfer-Molding kein Kunststoff auf die Kontaktflächen 6 gelangen kann. Das derart hergestellte Kunststoffobjekt enthält entsprechend der Stufe 21 der unteren Formhälfte 4 eine zurückversetzte Fläche, auf die eine Etikette 13 aufgebracht werden kann, deren Aussenseite bündig mit den freiliegenden Kontaktflächen 6 ist.

### Beispiel 3

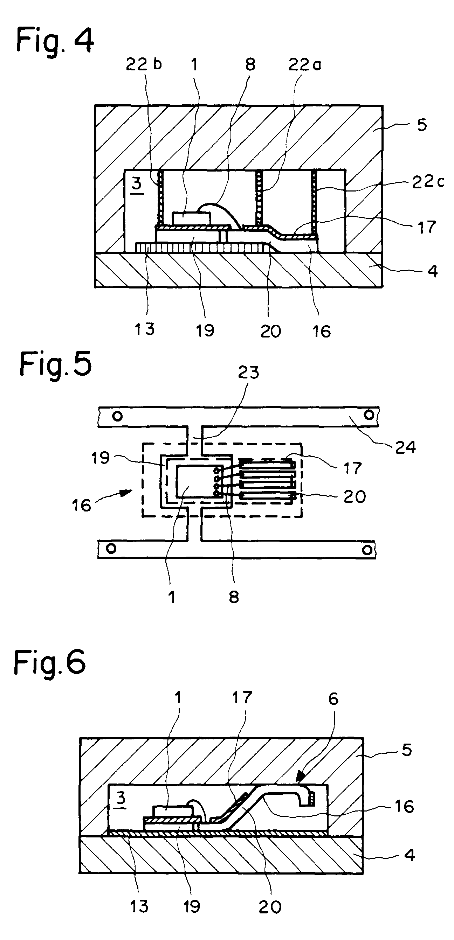

Die Fig. 4 zeigt ein Ausführungsbeispiel. bei dem die Etikette 13 nicht nachträglich auf das fertig gespritzte Kunststoffobjekt aufgebracht wird. sondern während des Vergiessens auf der unteren Formhälfte 4, die nun keine Stufe mehr aufweist, aufliegt. Die Finger 20 des Trägers 16 sind wie im vorhergehenden Beispiel gebogen und durch die Stifte 22a und/oder 22b und/oder 22c wird sichergestellt. dass sowohl die Kontaktflächen 6 des Trägers 16 unter Druck plan auf der unteren Formhälfte 4 bzw. der Bereich mit der Chipinsel 19 plan auf der Etikette 13 aufliegen.

### Beispiel 4

Dieses Beispiel betrifft eine Weiterentwicklung der beiden vorgehend erläuterten Beispiele, bei der der Träger 16. wie aus der Fig. 5 ersichtlich ist, noch nicht vom restlichen Teil des Leadframes 24 abgetrennt wurde, sondern über Stege 23 noch immer mit dem Rahmen des Leadframes 24 verbunden ist. Die Finger 20 des Trägers 16 sind ebenfalls gebogen, so dass die Kontaktflächen 6 nicht in der gleichen Ebene wie die Chipinsel 19 liegen. Der Rahmen des Leadframes 24 enthält die an sich bekannten Löcher, die der Positionierung des Leadframes 24 beim Montieren und beim Verdrahten des Halbleiterchips 1 sowie beim Umspritzen dienen. Die obere Formhälfte 5. deren den Hohlraum definierende Kanten mit einer gestrichelten Linie dargestellt sind, weist Ausnehmungen für die Aufnahme der Stege 23 auf. Bei dieser Lösung können die Stifte 22a, 22b und 22c entfallen, da der Träger 16 nun durch die Stege 23 gehalten ist. Die Etikette 13 kann vor dem Umspritzen entweder direkt in die untere Formhälfte eingelegt werden oder sie kann vorgängig auf den Träger 16 aufgeklebt werden, wobei die untere Formhälfte 4 der Spritzgussform analog den beiden vorgehend beschriebenen Beispielen ohne Stufe bzw. mit der Stufe 21 ausgebildet ist. Nach dem Umspritzen wird das Kunststoffobjekt vom nicht vergossenen Teil des Leadframes 24 abgetrennt.

### Beispiel 5

Die Fig. 6 zeigt ein Ausführungsbeispiel mit einem freigestanzten Träger 16. Die Chipinsel 19 liegt auf einer in die Spritzgussform auf die untere Formhälfte 4 gelegten Etikette 13. Die Finger 20 sind etwa "S"-förmig so gebogen, dass die Kontaktflächen 6 bei geschlossener Spritzgussform an der oberen Formhälfte 5 anliegen. Der Träger 16 ist somit unverrückbar zwischen den beiden Formhälften 4, 5 eingeklemmt und die Kontaktflächen 6 bleiben frei von Kunststoff. Im Prinzip sind keine Stifte nötig, um den Träger 16 während des Vergiessens festzuhalten. Fakultativ können jedoch Positionierstifte vorgesehen sein, die den Träger 16 positionieren und halten, bis die Spritzgussform geschlossen ist, und die dann zurückgezogen werden.

Andererseits ist es möglich. den Träger 16 nicht vor dem Vergiessen vom restlichen Teil des Leadframes 24 abzutrennen, sondern erst nach dem Vergiessen. so dass die genaue Positionierung des Trägers 16 im Hohlraum 3 mittels der Stege 23 erfolgen kann.

Die beim Transfer-Molding Verfahren üblicherweise eingesetzten Kunststoffe, das sind vor allem Kunststoffe auf Duroplast oder Epoxy Basis, sind deutlich weniger elastisch als die beim Spritzgiessen verwendeten Kunststoffe wie ABS oder PET. Dies führt dazu, dass sich im Transfer-Molding Verfahren hergestellte Multimediakarten nur schlecht biegen lassen und dass die Gefahr besteht. dass die Multimediakarte bei Biegebelastung zerbricht. Am meisten gefährdet für Rissbildung ist die Kante, wo sich die Leiterplatte und die Kunststoffmasse berühren, da diese Kante empfindlich auf Belastung durch Zugkräfte ist, die beispielsweise beim Biegen der Multimediakarte auftreten. Im folgenden werden vier Massnahmen vorgeschlagen, dank denen die Kraft. die nötig ist, um die Multimediakarte zu zerbrechen, markant vergrössert werden kann.

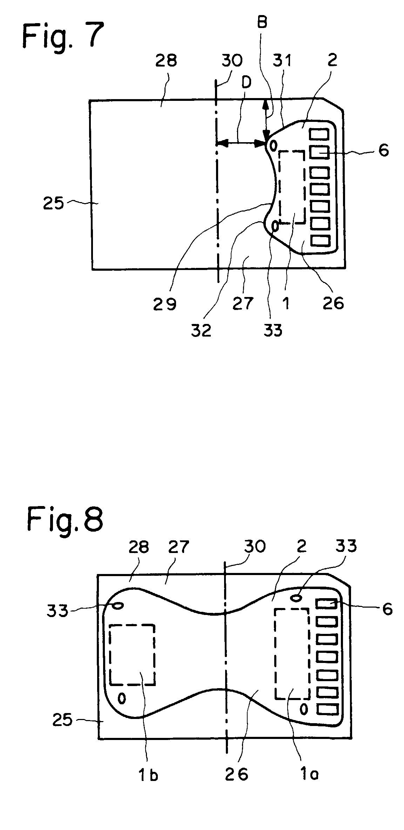

Die Fig. 7 zeigt die Oberfläche einer Multimediakarte 25 mit den freiliegenden Kontaktflächen 6, die gemäss dem Beispiel 1 hergestellt wurde. Die Multimediakarte 25 weist im Innern einen einseitig plazierten Halbleiterchip 1 oder mehrere einseitig plazierte Halbleiterchips 1 auf, dessen bzw. deren Lage mit einer gestrichelten Linie markiert ist. Die Oberfläche der Multimediakarte 25 lässt sich unterteilen in zwei Zonen, nämlich in eine erste Zone 26, wo die Leiterplatte 2 die Oberfläche bildet, und in eine zweite Zone 27, wo die gespritzte Kunststoffmasse 28 die Oberfläche bildet. Gemäss der ersten Massnahme ist die Leiterplatte 2 so dimensioniert, dass der Abstand D zwischen der Kante 29, wo sich Leiterplatte 2 und Kunststoffmasse 28 berühren, und der Linie 30, wo die Zugbelastung beim Biegen der Multimediakarte 25 in deren Längsrichtung am grössten ist, möglichst gross ist. Gemäss der zweiten Massnahme ist der Rand der Leiterplatte 2, der die Kante 29 bildet, als geschwungene oder gewellte Linie, und nicht als gerade Linie, ausgestaltet. Die Kante 29 wird dadurch länger, so dass die an der Kante 29 angreifenden Zugkräfte auf eine grössere Fläche verteilt werden. Als dritte Massnahme wird vorgeschlagen, die seitlichen Ränder 31 der Leiterplatte 2 schräg zueinander verlaufend auszubilden, damit die Zone 27 mit der Kunststoffmasse 28 auf der Höhe der Kante 29 möglichst breit ist (Breite B). Als vierte Massnahme wird vorgeschlagen, im Bereich der gegen die Mitte der Multimediakarte 25 gerichteten Rundungen 32 des Randes der Leiterplatte 2 Löcher 33, vorzugsweise ovaler oder runder Form, in der Leiterplatte 2 anzubringen. Dadurch wird die Elastizität der Leiterplatte 2 lokal erhöht, was wiederum die Gefahr der Rissbildung verkleinert. Zudem wird die Leiterplatte 2 noch besser in der Kunststoffmasse 28 verankert.

Die Fig. 8 zeigt die Oberfläche einer weiteren Multimediakarte 25, die im Innern zwei Halbleiterchips 1a und 1b aufweist, deren Lage mit einer gestrichelten Linie markiert ist. Erfindungsgemäss wird vorgeschlagen, die beiden Halbleiterchips 1a und 1b möglichst weit voneinander entfernt, d.h. möglichst weit entfernt von der Linie 30, wo die Zugbelastung beim Biegen der Multimediakarte 25 in deren Längsrichtung am grössten ist, anzuordnen. Der Rand der Leiterplatte 2 ist entlang der Längskanten der Multimediakarte 25 geschwungen mit einer Verjüngung in der Mitte ausgebildet. Der gewellte Rand ist so vorgesehen, dass die Zone 27 mit der Kunststoffmasse 28 in der Mitte der Multimediakarte 25, d.h. im Bereich der Linie 30 möglichst breit ist. Zudem sind wiederum Löcher 33 in der Leiterplatte 2 vorgesehen, um die Elastizität der Leiterplatte 2 lokal zu erhöhen.

Die Ausbildung der Leiterplatte mit dem geschwungenen oder gewellten Rand lässt sich nicht nur bei Multimediakarten, sondern allgemein bei flachen Kunststoffobjekten anwenden. Auch der in den Beispielen 2 bis 5 als Substrat vorgesehene metallische Träger 16 kann mit einem geschwungenen Rand ausgebildet werden, um die Biegebelastungsfähigkeit des Kunststoffobjektes zu erhöhen.

## Patentansprüche

1. Verfahren zur Herstellung eines Kunststoffobjektes, das einen Körper aus Kunststoff mit an einer Aussenseite freiliegenden elektrischen Kontaktflächen (6) aufweist, bei dem ein Halbleiterchip (1) auf einem Substrat (2; 16) plaziert und elektrische Verbindungen zwischen dem Halbleiterchip (1) und dem Substrat (2; 16) hergestellt werden, **gekennzeichnet durch** die Schritte:
- Plazieren des mit dem freiliegenden, ungeschützten Halbleiterchip (1) bestückten Substrats im Hohlraum (3) einer Spritzgussform, wobei die elektrischen Kontaktflächen (6) an einer Wand des Hohlraums (3) anliegen; und
- Bilden des Körpers aus Kunststoff durch Umspritzen des Substrats mit Kunststoff.

2. Verfahren nach Anspruch 1, **dadurch gekennzeichnet, dass** das Umspritzen mit Kunststoff im Transfer-Molding Verfahren erfolgt.

3. Verfahren nach Anspruch 1 oder 2, **dadurch gekennzeichnet, dass** als Substrat ein metallischer Träger (16) dient, der Teil eines Leadframes (24) ist und der teilweise mit einer Folie (17) bedeckt ist, wobei der Träger (16) während des Umspritzens mit Kunststoff über Stege (23) mit ausserhalb des Hohlraumes (3) liegenden Teilen des Leadframes (24) verbunden ist.

4. Verfahren nach einem der Ansprüche 1 bis 3, **dadurch gekennzeichnet, dass** eine Kante (29) des Substrates (2; 16) als geschwungene Linie ausgebildet ist.

5. Verfahren nach einem der Ansprüche 1 bis 4, **dadurch gekennzeichnet, dass** in Längsrichtung des Kunststoffobjektes verlaufende Ränder (31) des Substrates (2: 16) schräg zueinander verlaufen.

6. Kunststoffobjekt, das wenigstens einen auf einem Substrat (2; 16) plazierten Halbleiterchip (1) und einen Körper aus Kunststoff aufweist, wobei elektrische Kontaktflächen (6) des Substrates (2; 16) an einer Aussenseite des Kunststoffobjektes freiliegen, **dadurch gekennzeichnet, dass** eine Kante (29) des Substrates (2; 16) als geschwungene Linie ausgebildet ist.

7. Kunststoffobjekt nach Anspruch 6, **dadurch gekennzeichnet, dass** in einer Längsrichtung des Kunststoffobjektes verlaufende Ränder (31) des Substrates (2; 16) schräg zueinander verlaufen.
